## Europäisches Patentamt
## European Patent Office
## Office européen des brevets

(11) Veröffentlichungsnummer: **0 012 962**
**B1**

(12) **EUROPÄISCHE PATENTSCHRIFT**

(45) Veröffentlichungstag der Patentschrift:
15.06.83

(51) Int. Cl.³: **B 23 K 33/00**, B 23 K 9/02

(21) Anmeldenummer: **79105198.0**

(22) Anmeldetag: **15.12.79**

(54) Verfahren und Vorrichtung zum automatischen Schweissen von Verbindungen auf Blechen grosser Stärke.

(30) Priorität: **22.12.78 IT 3124678**

(43) Veröffentlichungstag der Anmeldung:
**09.07.80 Patentblatt 80/14**

(45) Bekanntmachung des Hinweises auf die Patenterteilung:
**15.06.83 Patentblatt 83/24**

(84) Benannte Vertragsstaaten:
**AT CH FR GB SE**

(56) Entgegenhaltungen:
**CH-A-272 331**
**FR-A-2 355 606**
**GB-A-1 242 067**
**GB-A-1 421 244**

(73) Patentinhaber: **ANSALDO S.p.A., Via Pacinotti, 20, I-16151 Genova-Sampierdarena (IT)**

(72) Erfinder: **Panzeri, Cesare, Via Visconti, 49, 53, Macherio (Mailand) (IT)**

(74) Vertreter: **Domenighetti Guissani, Dafne, c/o Ufficio Brevetti Ing. A. Racheli & C. Viale San Michele del Carso 4, I-20144 Milano (IT)**

BUNDESDRUCKEREI BERLIN

## Verfahren und Vorrichtung zum automatischen Schweißen von Verbindungen auf Blechen großer Stärke

Die vorliegende Erfindung betrifft das Schweißen von Verbindungen von zwei Körpern, beispielsweise von Zylindern für Druckbehälter von Atomreaktoren, sowie von Behältern im allgemeinen, die in der chemischen, Erdöl- und Atomindustrie verwendet werden.

Im allgemeinen ergibt sich bei den Verbindungen dieser Behälter folgende Lage:

— Einheitliche Wiederholung der Verbindungsmaße (kreisförmig, längs den Zylindern, kreisförmig oder gekrümmt für die Öffnungen usw.);
— langer Zeitaufwand für die Schweißung;
— die Verbindungen der Stahlbauteile der gleichen Partie entsprechen selten den genauen geometrischen Toleranzen;
— alle Verbindungen sind immer untereinander verschieden, da jede einzelne durch den Schweißvorgang mit Vorwärmung Verformungen erleidet;
— die Geometrie der Raupenablagerung kann nur schwer in genauer Weise vorausgesehen werden.

Infolge der geometrischen »Eigenart« sind die automatischen Führungssysteme in der Art der »Zahlenkontrolle« und »Robot« nicht anwendbar, da sie eine durch Ausdauer und erforderliche Wiederholbarkeit für die partieweise Herstellung gekennzeichnete vorausgehende Programmierung oder Einstellung der Geometrie der zu schweißenden Verbindung erfordern würden.

Der gegenwärtige Stand der Technik der Schweißanlagen für Verbindungen dieser Art besteht in Ausrüstungen mit der herkömmlichen Verwendung von Arbeitseinheiten, die mit Schweißköpfen ausgestattet sind, die, trotz der Anwendung von Vorrichtungen für die kontinuierliche Schweißung die Anwesenheit einer Bedienungsperson an Ort und Stelle auch für vorgewärmte Teile erfordern.

Aus der FR-A-2 355 606 ist eine Vorrichtung bekannt, nach der das Schweißen großer Zylinder mit einer Elektrode ausgeführt wird, deren Stellung von einem Taster gesteuert wird, der die Fugenflanke und den Fugengrund abfühlt und dementsprechend die Stellung der Elektrode regelt. Die Steuerung erfolgt in der Art »aus – ein«. Bei dieser bekannten Vorrichtung muß am Ende jeder Schweißraupe der Beginn der nachfolgenden Schweißraupe manuell vorgenommen werden.

Die vorliegende Erfindung hat sich zur Aufgabe gemacht, ein Verfahren und eine Vorrichtung zu verwirklichen, die das vollkommen automatische Schweißen der Fuge zwischen großen Zylindern vom Anfang bis zum Ende ermöglichen.

Diese Aufgabe wird durch die Maßnahmen gemäß den Ansprüchen gelöst.

Die damit erhaltenen Vorteile sind folgende:

a) Die bisher notwendige Anwesenheit einer Bedienungsperson in der Schweißzone wird vermieden;
b) die Leistung wird erhöht;
c) die Qualität des nicht mehr von der Bedienungsperson beeinflußten Schweißvorgangs wird verbessert.

Das erfindungsgemäße Verfahren sieht eine automatische Reihenfolge der Arbeitsvorgänge vor, wodurch gewährleistet wird:

— Aufrechterhaltung des Abstandes der Elektrode von der Fugenwand;
— gleicher Abstand zwischen den Raupen;
— konstante programmierte Neigung der Querstrecken der Raupen bei jeder Zylinderdrehung;
— jede Querstrecke innerhalb der Fuge beginnt jedesmal in Fortsetzung der vorausgegangenen Strecke;
— automatischer Durchgang der Reihenfolge durch die Programmvorgänge für eine, zwei, drei, vier und fünf Raupen.

Anhand eines in den Figuren der beigefügten Zeichnung dargestellten Verwirklichungsbeispiels wird die Erfindung nachstehend ausführlicher beschieben. Es zeigen

Fig. 1, 2, 3 und 4 schematische Darstellungen von Schweißdurchgängen an verschiedenen Höhen einer Fuge,

Fig. 5, 6 und 7 schematische Vorderansichten einer erfindungsgemäßen Schweißvorrichtung in drei verschiedenen Schweißstellungen,

Fig. 8 eine Schnittansicht einer Fuge während des Schweißvorgangs,

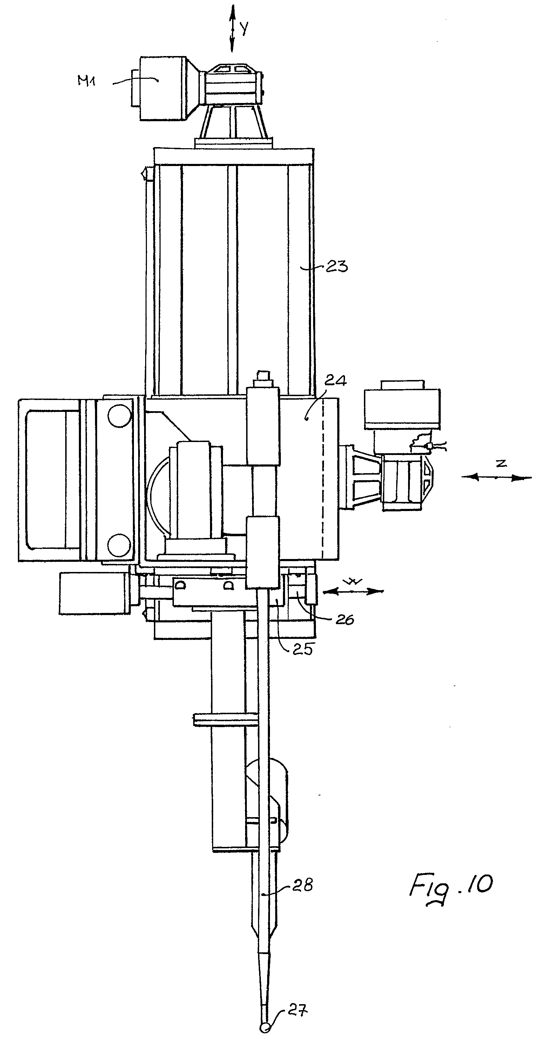

Fig. 9 und 10 um 90° zueinander gedrehte Ansichten der erfindungsgemäßen Vorrichtung,

Fig. 11 eine Draufsicht auf eine schräge Schweißraupe,

Fig. 12 und 12b ein Diagramm des Arbeitsablaufes (flow chart) der erfindungsgemäßen Vorrichtung,

Fig. 13 und 14 Vorderansichten der tragbaren Druckknopfschalttafel und der Logikkassette,

Fig. 15a, 15b, 15c, 15d den Arbeitskreislauf der Maschine bei zwei, drei, vier und fünf Schweißraupen,

Fig. 16 ein Blockdiagramm der Programmierlogik,

Fig. 17 ein Blockdiagramm der Logik für die Anzahl der Schweißraupen,

Fig. 18 ein Blockdiagramm der Logik des Schrittmotors der Achse W,

Fig. 19 ein Blockdiagramm für die Steuerung des liegenden Motors M2 der Achse Z,

Fig. 20 ein Blockdiagramm des liegenden Motors M2 der Achse Z,

Fig. 21 ein Blockdiagramm für die Steuerung des stehenden Motors M1 der Achse Y,

Fig. 22 ein Blockdiagramm des stehenden Motors M1 der Achse Y.

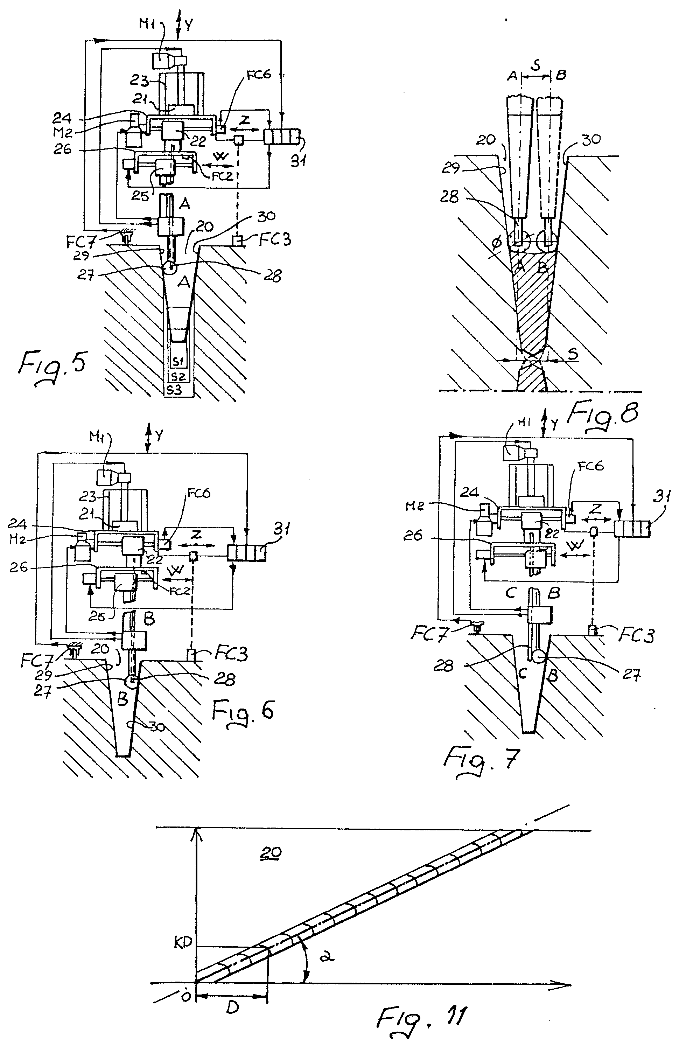

Die erfindungsgemäße Vorrichtung umfaßt, wie in den Fig. 5 bis 7 dargestellt ist, zwei Hauptschlitten zur Nachformung, die gemäß der senkrechten Achse Y (Schlitten 21) und der waagrechten Achse Z (Schlitten 22) quer zur Fuge gerichtet sind. Sie bewegen sich auf den Führungen 23 und 24. Kinematisch in Reihenschaltung, tragen sie die Elektrode und mittelbar durch einen auf Führungen 26 laufenden und der Achse W entsprechend parallel zur Achse gerichteten dritten Schlitten 25 den biaxialen Nachformungstaster 27.

Die Achsen Y und Z werden von zwei Servosystemen zur elektronischen Nachformung gesteuert, von denen jedes für die eigene Achse das Signal der Rückkopplung von einem im Taster 27 enthaltenen linearen Auslenkungswandler mißt. Aus der Gegenüberstellung dieses Signals mit einem vorbestimmten Wert wird ein Fehlersignal ausgearbeitet, dem eine linear proportionelle Steuerung der Achsengeschwindigkeit entspricht, die von einem Gleichstrom-Servomotor niedriger Trägheit mit Dauermagneterregung (M1, Y; M2, Z) verwirklicht ist.

Die Kontrolle der beiden Achsen (Y-Z) ermöglicht die automatische, anpassende Führung der Schweißausrüstung gemäß der tatsächlichen Lage der Fuge. Der Taster 27 formt quer (Achse Z) eine der Fugenflanken und senkrecht (Achse Y) den Fugengrund vor der Elektrode nach.

Ein inkrementaler Verschiebungswandler FC6, der am Getriebe des Schlittens 24 (Achse Z) angebracht ist, liefert der Steuerlogik ein Signal, das in einem Programmdurchlauf verwendet wird, der dem Beginn jeder Schweißschicht entspricht, um die Breite der Fuge zu messen und dann die Arbeitsvorgänge (zwei, drei, vier, fünf Schweißraupen) zu bestimmen.

Der dritte Schlitten 25 (Achse W), dessen Bewegung von einem Schrittmotor (stepping motor) M3 veranlaßt wird, ermöglicht die entsprechende Stellung zwischen dem auf einer Fugenflanke abgestützten Tasters 27 und der Elektrode 28 einem Bezugspunkt Null gegenüber (der von einem Geber FC3 gelesen wird) zu verändern. In Übereinstimmung mit diesem Bezugspunkt Null fluchten die Elektrode 28 und der Taster 27 in Richtung der Fuge. Die gegenseitige Stellung der Elektrode und des Tasters wird automatisch verändert, wenn die Steuerlogik die Ausführung von drei, vier, fünf Schweißraupen entscheidet und es somit erforderlich ist, innere Schweißraupen neben den an den Fugenflanken angrenzenden Schweißraupen auszuführen.

Die die Kontrolle und die Betätigung der Achsen Y, Z, W ausführenden elektronischen Geräte sind folgende:

1. Eine Programmierlogik 31, die außer der Führung des Schweißvorgangs auch die auf Fernsteuerungsdruckknopftafeln verlegten verschiedenen manuellen Steuerungen der Achsen ausführt

Während des automatischen Arbeitsvorgangs arbeitet die Logik »Maschinen-Bedingung« (Signale, die vom biaxialen [Y, Z] Taster 27 der Meßwandler für die Fugenbreite kommen und Zunahme der Drehung des zu schweißenden Zylinders, Endschalter, Steuerungen des Bedienungsmannes) in Funktion des Vorschreitens des Arbeitsablaufes aus und liefert am Ausgang aufgrund der Instruktionen eines Mikroprogramms die erforderlichen Schaltungen für die Betätigungen der drei Achsen, der Schweißmaschine und der Werkstück-Drehungsvorrichtung.

Der Bedienungsmann muß auf der vorderen Schalttafel folgende Einstellungen vornehmen:

a) Die den Durchgang zur Durchführung von zwei, drei, vier, fünf Raupen unterschiedlicher Fugenbreiten und

b) die Geschwindigkeiten des Fugendurchgangs zwischen einer und der nachfolgenden Raupe. Außerdem muß der Bedienungsmann den automatischen Arbeitsablauf durch entsprechende Druckknöpfe anlassen oder anhalten.

Die Logik kontrolliert etwaige anomale Zustände, die während der Arbeit eintreten können, wobei ein Warnzeichen gegeben wird (in Betracht kommen: die Wandler, die Getriebe, eine Unterbrechung der Elektrode, manuelle Warnung, Spannungsausfall). Die Warnung veranlaßt die Unterbrechung des Fortschreitens des Arbeitsablaufs, den Stillstand des Schweißens und der Bewegung des Werkstücks, die Annullierung des im Gange befindlichen Arbeitsvorgangs und das Aufheben der Arbeitseinheit mittels der Achse Y in senkrechte Stellung. Sobald die Ursache beseitigt ist, kann der Bedienungsmann die Warnung durch eine entsprechende Schaltung löschen. Die Logik befähigt dann die manuellen Schaltungen, die erforderlich sind, um die Absenkungen für die Nachformung der Fuge durchzuführen. In diesem Zustand ist es mit entsprechender Schaltung möglich, den Arbeitskreislauf an der gleichen Stelle wieder aufzunehmen, an der er von der Warnung unterbrochen wurde.

### 2. Eine Steuereinheit für die Servomotoren M1 und M2 der Achsen Y und Z

Sie besteht aus einem Antrieb mit höher Ansprechgeschwindigkeit für jede Achse (bei dem für die Modulation der Motorbewehrungsspannung die Technik der Schalttransistoren verwendet wird).

Dieser Antrieb steuert den Motor in vier Quadraten (zweiseitig gerichtete Geschwindigkeit und umkehrbarer Antriebsdrehmoment).

Zusammen mit jedem Antrieb ist ein Decodier- und Vorverstärkungsmodul des vom Auslenkungswandler der entsprechenden Achse Y oder Z kommenden Signals verbunden (LUDT, Ausgleichstransformator mit linear veränderlichem Transforformationsverhältnis in Funktion der linearen Verschiebung des Kerns; der LUDT ist im Nachformungstaster enthalten).

Die logische Einheit 1 liefert der Steuereinheit 2 die Signale der Bezugsgeschwindigkeit für die beiden Antriebe und empfängt die Signale der Auslenkung Y-Z vom Taster 27; zur logischen Einheit 1 kommen die entsprechenden Signale der Antriebsstörungen und des Tasterschutzes gegenüber den außergewöhnlichen Auslenkungen, diese Signale werden als Warnung ausgearbeitet.

### 3. Eine Steuereinheit des Schrittmotors M3 der Achse W

Sie umfaßt einen zweipoligen Antrieb, bei dem die Modulation des Stroms und die Phasenumschaltung von in Kommutation geschalteten Transistoren ausgeführt ist. Die angewandte Technik verleiht dem Antrieb einen vorzüglichen Leistungsgrad, einen weitgehenden Frequenzbereich der Steuerung mit konstantem Antriebsdrehmoment und Dämpfung der Resonanzerscheinungen durch Halbschritt-Motorsteuerung.

Diese Einheit empfängt von der Logik 1 die Zeichen »clock up« und »clock down« für die Drehung in Uhrzeiger- und entgegensetzter Richtung von M3 und liefert im Störungsfall ein Signal, das als Warnung ausgearbeitet wird.

Jede beschriebene Einheit ist in einem Standard-Batteriegestell 19 untergebracht. Die Durchführung des Schweißens beruht auf folgenden Voraussetzungen:

a) Der Schweißvorgang beginnt auf einer ausgewählten Fugenflanke, die den Beginn jeder Schweißschicht bestimmt.

b) Alle Querstrecken des Durchgangs zwischen einer und der nachfolgenden Raupe sind so verwirklicht, daß eine voreingestellte, konstante Neigung beibehalten wird.

c) Jede Querstrecke wird so beginnen, daß sie der vorausgegangenen folgt.

d) Nach Ausführung der ersten Schweißraupe wird eine Querstrecke ausgeführt, während der die Breite S der Fuge an diesem Punkt gemessen wird. Während der Ausführung der zweiten Raupe, die auf der der ersten Raupe gegenüberliegenden Seite liegt, wird aufgrund einiger voreingestellter unterschiedlicher Werte S1, S2, S3 die Entscheidung der durchzuführenden Anzahl von Raupen N ausgearbeitet.

Nachdem einige Anfangsbedingungen berücksichtigt worden sind, die festlegen, daß die Elektrode 28 und der Taster 27 fluchten und die manuellen Nachformungen ausgeschlossen sind, ergibt sich beim Einschalten des Arbeitsablaufbeginns automatisch:

### A) Senkrechte Annäherung des Schlittens der senkrechten Achse Y (M1) zur Nachformung

Der eingestellte mechanische, nach unten gerichtete Taster 27 (unabgeglichene Auslenkung) verursacht durch Rückfahren die Steuerung von M1, wodurch sich der senkrechte Schlitten senkt. Sobald der Taster 27 den Boden der Fuge erreicht, verringert sich seine Abweichung fortlaufend nach unten und damit die Absenkungsgeschwindigkeit bis zum Erreichen der von einem entsprechenden elektronischen Fühlgerät FC-OV angezeigten »Auslenkung«. Eine Veränderung der Auslenkung gegenüber dem senkrechten Nullpunkt veranlaßt die übereinstimmende Bewegung des senkrechten Schlittens mit proportioneller Geschwindigkeit, um die Auslenkung im Nullpunkt festzulegen: Nachformungsbedingung. Die senkrechte Nachformung (Y) wird während des ganzen automatischen Arbeitsablaufs aufrechterhalten, um den Abstand Fuge—Elektrode—zu schweißendes Werkstück beizubehalten.

4

### B)Waagrechte Annäherung des Schlittens der Achse Z (M2) zur Nachformung

Das Programm steuert eine Auslenkungsreferenz zum Servosystem der Nachformung Z, wobei das Signal der Rückführung des Tasters Null ist (da es vom abweichenden Nullpunkt mechanisch ausgeglichen bleibt). Über M2 wird die Bewegung des Schlittens der Achse Z in entgegengesetzter Richtung zu der von dem Bezugswert verlangten Auslenkungsrichtung erzeugt (diese Richtung der anfänglichen Nachformung kann vom Bedienungsmann gewählt werden).

Die Auslenkung des Tasters wird erhöht und vermindert fortschreitend den entsprechenden Fehlern gegenüber dem Bezugswert beim Zusammentreffen mit der Fugenflanke; damit verringert sich proportionell die Geschwindigkeit des Schlittens Z bis zum Erreichen des Ausgleiches der angegebenen Auslenkung durch ein zweckmäßiges elektronisches Fühlgerät FC-00. Eine Veränderung der Auslenkung gegenüber dem entsprechenden erreichten Bezugswert veranlaßt die übereinstimmende Bewegung des waagerechten Schlittens mit proportioneller Geschwindigkeit, um das Abweichen auf den Bezugswert zu stabilisieren; Nachformungsbedingung. Die waagerechte Nachformung ermöglicht die Verwirklichung der Parallelität zwischen den Rändern der Fuge und dem Schweißraum.

### C) Beginn des Schweißens mit den einleitenden Vorgängen zur Vorbereitung des Schweißens und Einschaltung des Schweißvorgangs und anschließender Beginn der Werkstückbewegung

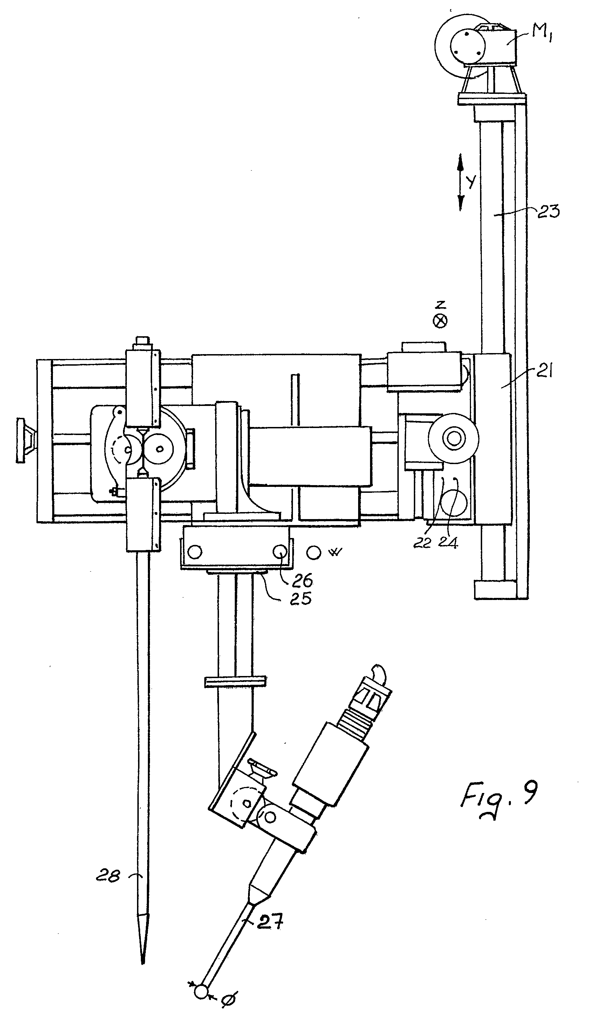

Der Taster 27 befindet sich zu Beginn der Schweißung, d. h. am Grund der Fuge 20. Er wird beispielsweise so eingestellt, daß er sich auf der linken Seite 29 der Fuge anordnet, wie mit ausgezogener Linie in Fig. 8 angegeben ist, während die Elektrode ihm fortlaufend folgt und sich dabei immer auf einer senkrechten Ebene A-A (Fig. 5 und 8) hält, die beide Geräte enthält und sich parallel zur Fugenachse befindet. So wird eine erste Schweißraupe I ausgeführt, deren Beginn vom Geber FC3 gegeben wird. Der Taster 27 läuft vor der mit ihm fluchtenden Elektrode und führt die Schweißausrüstung mit der biaxialen Nachformung (Y−Z).

Sobald die mit I bezeichnete Schweißraupe fertiggestellt ist, befindet sich der Taster 27 erneut in der Anfangsstellung. An diesem Punkt erfolgt die Signalisierung des Mikroschalters FC3. Die Logik kehrt das Bezugszeichen der Auslenkung um und schaltet die Geschwindigkeitskontrolle der Achse Z nach Einstellung der Quergeschwindigkeit ein; damit wird die Querbewegung des Schlittens der Achse Z veranlaßt, die die Elektrode 28 und den damit fluchtenden Taster 27 zu der der ersten gegenüberliegenden Flanke führt. Der Übergang ist zu Ende, wenn sich der Taster 27 bis zum Ausgleichen der Auslenkung verlangsamend auf die Fugenflanke absetzt.

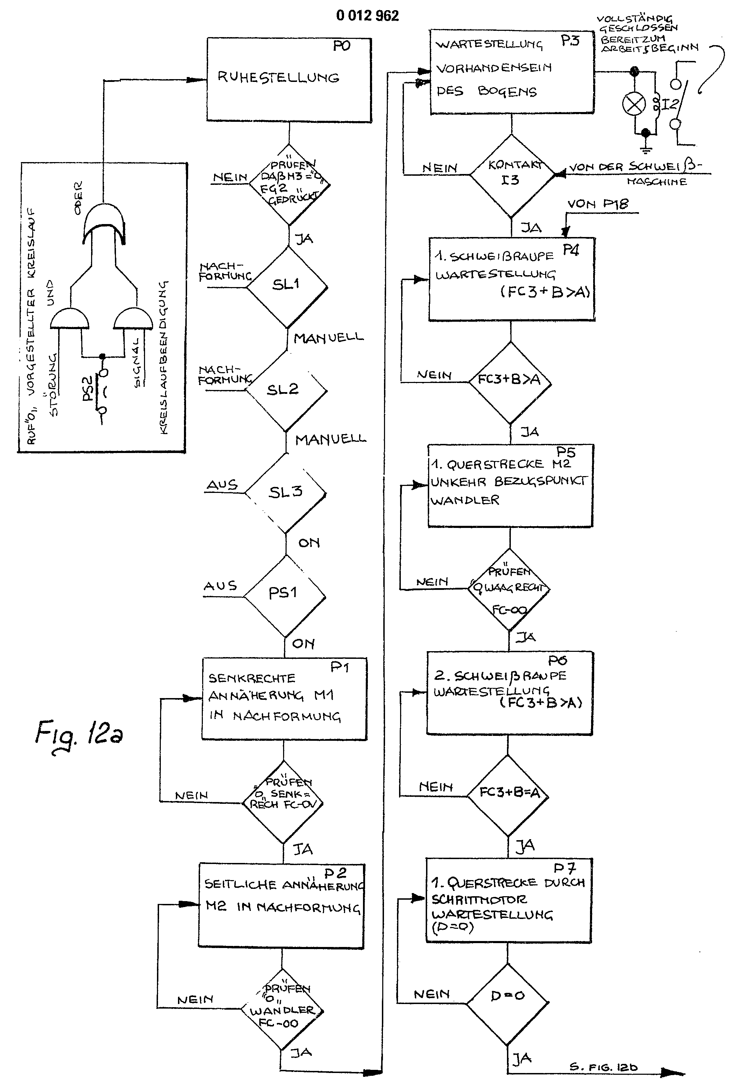

Während des Übergangs wird mit dem Fühler FC7 die tatsächliche Verschiebung D des Werkstücks in Richtung der Fugenachse ausgetastet; er steuert über eine zweckentsprechende Logik eine Verschiebung kD in Querrichtung (Fig. 11), in der k eine vorbestimmte Konstante ist. Dadurch ergibt sich, daß auch bei unregelmäßigen Bewegungen des Werkstücks die Neigung $\alpha$ der schrägen Strecke immer konstant bleibt. Der Taster bewegt sich weiter nach rechts, bis er sich gegen die rechte Fugenflanke 30 abstützt, wie mit gestrichelten Linien in Fig. 8 dargestellt ist. Gleichzeitig hat das elektronische Gerät die Breite S der Fuge an dieser bestimmten Höhe durch einen Wandler FC6 gemessen, der die Verschiebung der Achse Z mißt. Das Beginnen des Messens wird vom Geber FC3 veranlaßt, während das Ende einer kleinen, vorbestimmten Auslenkung angezeigt wird, die der Taster bei Ankunft auf der anderen Flanke ausführt. Selbstverständlich wird auch den eigenen Ausmaßen $\Phi$ des Fühlers Rechnung getragen (Fig. 8). Das elektronische Gerät vergleicht die gemessene Breite S mit den vorgewählten Breiten S1, S2, S3, die ein Mehrfaches einer bestimmten Grundbreite in Funktion der Breite jeder Raupe sind. Insbesondere wird bei Beginn des Schweißens festgestellt, daß die gemessene Breite S geringer als S1 ist, so daß die in Ausführung befindliche Schicht immer mit zwei Schweißraupen gefüllt werden muß. Dann wird die Schweißraupe II ausgeführt, wobei der Taster 27 auf der rechten Fugenflanke 30 aufgestützt ist und die Elektrode 28 dem Taster auf der gleichen Wegstrecke folgt und beide auf der Ebene BB (Fig. 6 und 8) bleiben.

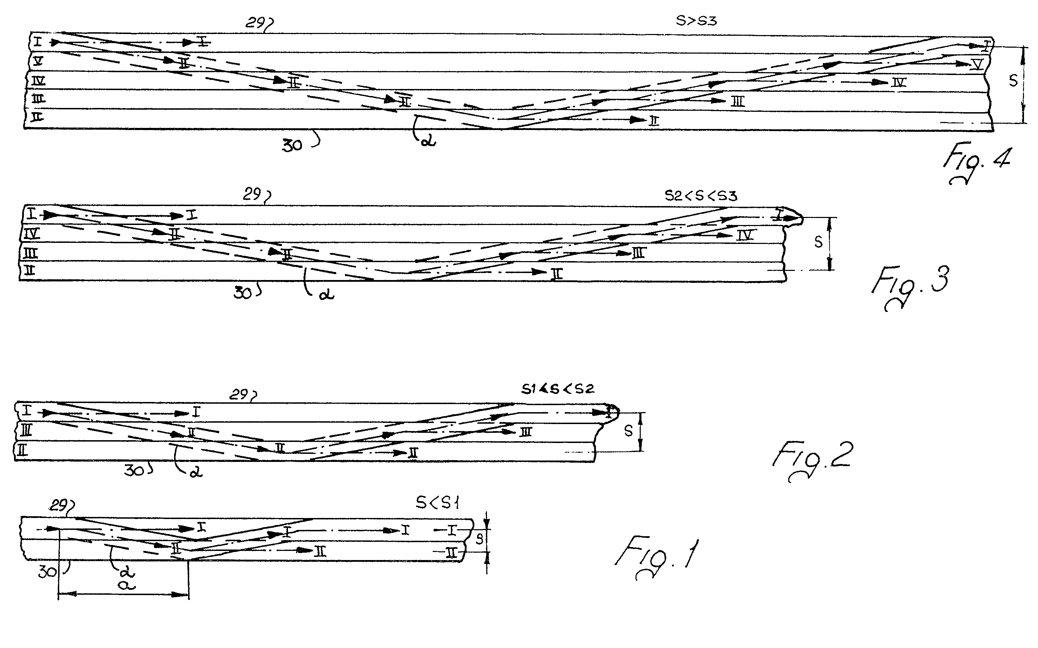

Wenn der Taster wieder am Nullpunkt angelangt ist, wird er bis zum Ende der vorausgegangenen Querstrecke weiter gesteuert, die in Fig. 1 mit »a« angegeben ist. Nun werden der Taster und die Elektrode 28 zum Beginn einer neuen Raupe I gesteuert, wobei sie sich wieder auf die linke Fugenflanke verschieben. Sie führen dann eine neue Querstrecke aus, die eine zur vorausgegangenen Strecke entgegengesetzte Neigung $\alpha$ hat, sonst jedoch vollkommen gleich ist. Die Logik schaltet den Beginn einer neuen Schweißschicht ein, wenn der Taster mit der linken Fugenflanke 29 in Berührung kommt. Auf diese Weise wird eine neue Schweißschicht ausgeführt, die der vorausgegangenen vollkommen ähnlich ist, wenn die während der Ausführung der ersten geneigten Strecke gemessene Breite S noch geringer als S1 ist und diese Schicht vom Nullpunkt eines Wertes 2a, der die Eigenschaft dieser Schicht ist, verschoben wird. Selbstverständlich wird jede Schicht einen charakteristischen und von der örtlichen Geometrie der Fuge abhängenden Wert a haben.

Auf diese Weise wird fortgefahren, die Fuge mit zwei Schweißraupen zu füllen, wobei jede Schicht gegenüber der vorausgegangenen Schicht nach vorn gelegt wird, bis eine Schicht erreicht wird, bei der der Taster eine Breite S mißt, die zwischen S1 und S2 liegt, wobei S1 das oben in Betracht gezogene Maß und S2 ein zweites voreingestelltes Maß ist, das, wenn es überschritten wird, festlegt, daß drei Schweißraupen erforderlich sind. Dann wird die an die Flanke 30 angrenzende Schweißraupe II ausgeführt, was in Fig. 2 dargestellt ist, nachdem der Taster nach rechts gegenüber der Elektrode 28 der Achse W entlang in einem Abstand von $\frac{S}{N-1} = \frac{S}{2}$ verschoben wird, wobei N die Anzahl der Raupen ist, die an dieser Schicht ausgeführt werden müssen. Der Taster bleibt selbstverständlich auf der rechten Fugenflanke 30 gestützt, gleichzeitig steuert er jedoch die Elektrode 28 nach links um einen Abstand, der dem Achsabstand der Schweißung einer geneigten Linie $\alpha$ entlang in entgegengesetzter Richtung zur vorausgegangenen Querstrecke gleich ist; anschließend führt die Elektrode 28 die Schweißraupe III aus. Die Elektrode befindet sich jetzt auf einer Ebene CC, die verschieden und parallel zur Ebene BB des Tasters ist (Fig. 7). Am Ende der Schweißraupe III wird der Taster erneut nach rechts von $\frac{S}{N-1} = \frac{S}{2}$ verschoben und steuert die Elektrode um den gleichen Wert nach links (Stemmeißelseite 29) längs einer anderen, um $\alpha$ geneigten Querstrecke gegenüber der Vorschubrichtung und führt eine neue Schweißraupe I auf einer oberen Schicht aus. Am Ende der obengenannten Querstrecke hat die Elektrode die erste Raupe der nachfolgenden Schicht bereits begonnen; die Logik blockiert dann die waagerechte Nachformung der Achse Z; mit dem Schlitten 25 der Achse W wird der Taster 27 nach links zurückgebracht, wobei der Schlitten auf seine von FC2 festgestellte Nullstellung gebracht wird. Am Ende dieses Vorgangs wird die Nachformung der Achse Z entlang in Anfangsrichtung wieder aufgenommen. Diese Schweißdurchgänge sind mit den jetzt beschriebenen gleich, wenn die Fugenbreite immer zwischen S1 und S2 liegt.

Sobald der Taster 27 die Breite S der Fuge gemessen hat, die zwischen S2 und S3 liegt, wobei S3 ein voreingestelltes Maß ist, das die Übergangsschwelle der Arbeitsstufe von vier und fünf Raupen angibt, erfolgt der Arbeitsvorgang mit vier Schweißraupen. Insbesondere wird, nachdem bereits eine Schweißraupe I auf der linken Fugenflanke 29 und eine schräge Strecke $\alpha$ gegenüber der Vorschubrichtung ausgeführt wurde (Fig. 3), während welcher die Breite S gemessen wird, eine Schweißraupe II auf einer vollständigen Drehung des Zylinders ausführt, wobei der Taster 27 und die Elektrode 28 immer an der rechten Fugenflanke 30 angrenzen. Der Taster wird also an der Flanke 30 gehalten, während die Elektrode von einer Breite $\frac{S}{N-1} = \frac{S}{3}$ einer geneigten Strecke entlang in entgegengesetzter Richtung zur vorausgehenden verschoben wird, wobei die Schweißraupe III auf einer ganzen Zylinderdrehung ausgeführt wird. Dann wird die Schweißraupe IV ausgeführt, wobei der Taster 27 erneut gegenüber der Elektrode 28 um einen Abstand $\frac{S}{3}$ verschoben wird, so daß der Taster 27, da er mit der rechten Fugenflanke 30 in Berührung bleiben muß, die Elektrode 28 erneut um einen Abstand $\frac{S}{3}$ verschiebt und dann die Schweißraupe IV um eine ganze Zylinderdrehung ausgeführt wird.

Der Taster 27 verschiebt sich dann erneut um $\frac{S}{3}$, läßt die Elektrode wieder eine Querstrecke ausführen, woraufhin eine neue Raupe I auf einer oberen Schweißschicht ausgeführt wird. Bei Beendigung der Querstrecke, die der Raupe I vorausgeht, erfolgt das Einholen des Tasters 27 nach links, wie bereits im Verlauf der Ausführung von drei Schweißraupen beschrieben wurde.

Wird ein größeres Maß S als S3 gemessen, müssen fünf Schweißraupen ausgeführt werden, wie in Fig. 4 dargestellt ist. Die aufeinanderfolgenden, miteinander verbundenen Schweißraupen I, II, III, IV und V werden durch aufeinanderfolgende Querstrecken ausgeführt.

Die Abweichungen des Tasters 27, die einen gegebenen Grenzwert überschreiten (und im allgemeinen auf ein unvorhergesehenes Verschließen der Fuge, einen Stoß od. dgl. zurückzuführen sind), werden von der Logik als Störungsfall betrachtet und haben das sofortige Anheben der Nachformungs- und Schweißausrüstung in Einholstellung zur Folge.

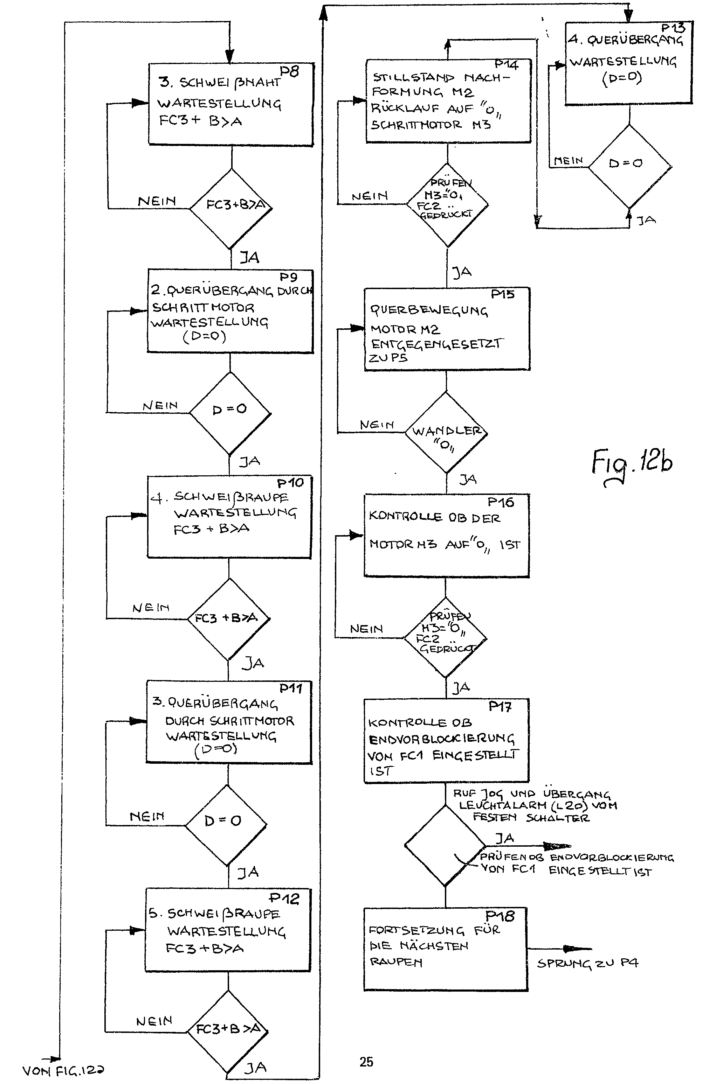

Nachdem nun die Beschreibung der äußeren Arbeitsweise der Maschine beendet ist, wird das in den Fig. 12a und 12b dargestellte Diagramm des Arbeitsablaufes beschrieben.

Das Anfangsprogramm 0 (P0) hat die Aufgabe, den automatischen Kreislauf auszuschließen. Die Bedingung zum Vorrücken des nächsten Programms ist:

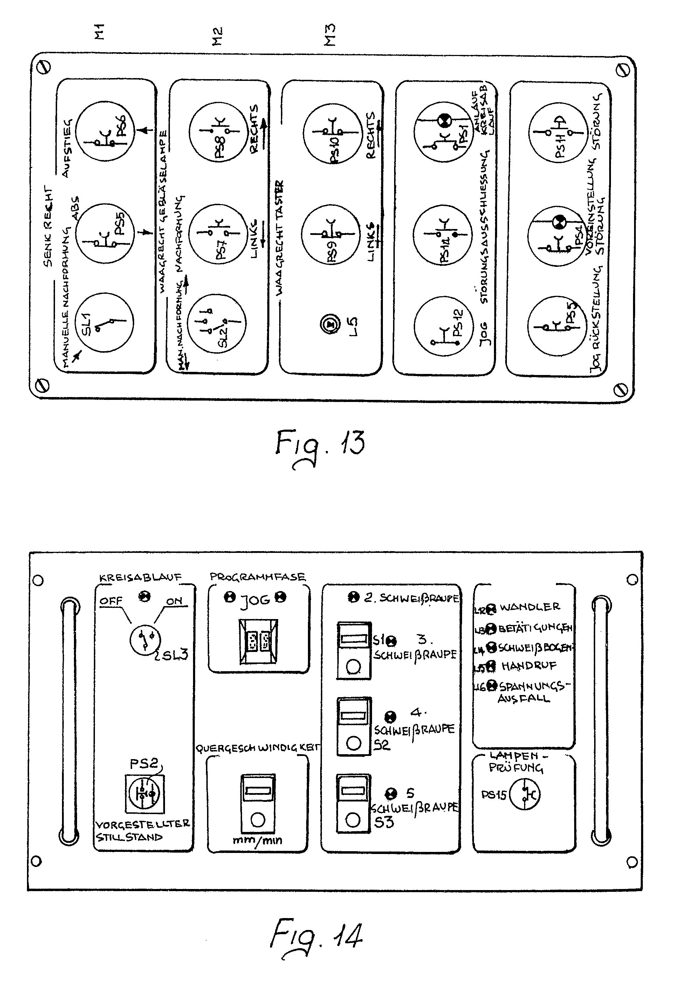

— FC2 (Endschalter der Referenz des Schlittens der Achse W) muß gedrückt sein;
  dadurch wird erreicht, daß die Elektrode 28 und der Taster 27 fluchten. Die Lampe L5 auf der Druckknopftafel (Fig. 13) leuchtet auf, was bedeutet, daß der Motor M3 zum Verschieben der waagerechten Achse W sich in Nullstellung befindet.
— SL1 (Wählschalter Nachformung von Hand der Achse Y) muß sich in Handstellung befinden.

- SL2 (Wählschalter zur rechten, linken oder von Hand durchzuführenden Nachformung) muß sich in Handstellung befinden.
- SL3 (Wählschalter offen/geschlossen (on/off) des Logikgerätes) muß sich auf »on« befinden. In Stellung »on« ist eine Pufferbatterie für den Programmzähler eingeschaltet.
- PS1 (Druckknopf für den Beginn des Kreislaufes) muß gedrückt sein.

Das Programm 1 (P1) steuert die Abwärtsbewegung des Schlittens der Achse Y, der bei der Nachformung vom Servomotor M1 gesteuert wird.

Die Bedingung zum Vorrücken des nächsten Programms ist, FC-0V (vom elektronischen Fühlgerät für die senkrechte Auslenkung »0« kommendes Zeichen) zu aktivieren.

Das Programm 2 (P2) hat die Aufgabe, die Bewegung der waagerechten Annäherung des Schlittens der Achse Z zu verwirklichen, der vom Servomotor M2 zur Nachformung in der vom Wählschalter SL4, der auf der Rückseite der Logikkassette angeordnet ist, festgelegten Richtung zu steuern. Dieser Wählschalter legt die Nachformung auf der rechten oder linken Seite des Tasters 27 in diesem Zustand des operativen Initialkreislaufs fest. Das Programm hat außerdem die Aufgabe, die Nachformung der Achse Y aufrechtzuerhalten. Das Programm 2 rückt zum folgenden Programm vor, wenn FC-00 aktiv ist. FC-00 ist das Signal, das vom elektronischen Fühlgerät zum Ausgleich zwischen der elektrischen Referenz der Auslenkung (deren Zeichen von SL4 bestimmt wird und durch den auf der Rückseite des Kastens angeordneten Potentiometer eine regelbare Amplitude hat) und dem demodulierten Rückführsignal des Wandlers der waagerechten Abweichung des Tasters kommt.

Das Programm 3 (P3) hat die Aufgabe des Wartens. Es veranlaßt das Schließen des Kontaktes 12 im Ausgang, das die Zustimmung der Logik zum Beginn des Schweißens und der Vorbereitungsvorgänge der Hilfsgeräte (Schweißvorrichtung – Umkehrer) bildet. Es bestimmt auch die Aufrechterhaltung der Nachformung der Achsen Y und Z wie während der Programme P1 und P2. Dieses Programm rückt zum nächsten Programm vor, wenn 13 aktiviert ist, wobei 13 der geschlossene Kontakt der Hilfsgeräte zum Anzeigen des Beginns der ersten Schweißraupe ist.

Das Programm 4 (P4) hat die Aufgabe,

- eine Schweißschicht zu beginnen, die der ersten Raupe der ersten Schicht entspricht, wenn man vom Programm P3 kommt, oder die nachfolgenden Schichten auszuführen, sofern man vom Programm P18 kommt;
- die Nachformung den Achsen Y, Z entlang während der Programmdauer P1 und P2 aufrechtzuerhalten;
- dem Speicher das Signal der Beendigung der Zylinderdrehung (vom Geber FC3) zu geben, das die Nullstellung des Zylinders gibt;
- den Zähler A auszuschalten. Dieser Zähler führt in zunehmender Weise (in up) die kontinuierliche Speicherung der Anzahl der Winkelzunahmen der Zylinderdrehung (vom Fühler FC7, der die Winkelzunahme der Zylinderdrehung) während der Querstrecken aus (sofern P4 von P3 kommt, steht der Zähler A auf 0);
- den Zähler B auszuschalten, bis das Signal der Umdrehungsbeendigung (von FC3) nicht gepeichert ist. Der Zähler B führt in zunehmender Weise (in up) das Zählen der Anzahl der Zunahmen der Zylinderdrehungen (von FC7) vom Beginn des Eingreifens von FC3 durch, bis der eigene Inhalt den Inhalt des Zählers A (B > A) übersteigt;
- Rückstellung des Zählers C auf Null. Der Zähler C mißt die Breite der Fuge;
- den Zähler D auf den im Zähler C enthaltenen Wert in asynchronischer Weise einzustellen. Der Zähler D kontrolliert die Querbewegung der Achse W während der Verschiebungen zu den Zwischenraupen.

Die Vorrückbedingung zum nächsten Programm ist, daß B größer als A (B > A) ist, d. h., das digitale Vergleichsergebnis zwischen dem Inhalt des Zählers A und dem Inhalt des Zählers B (B zählt von FC3 bis B > A); auf diese Weise erhält man die nachfolgende Querverschiebung und etwaige vorausgehende Querverschiebungen.

Das Programm 5 (P5) hat die Aufgabe, dem Taster die Querstrecke gegenüber der Fuge durchführen zu lassen, um dessen Breite zu messen.

- Insbesondere wird die Umkehr des elektrischen Bezugszeichens der waagerechten Abweichung der Achse Z durchgeführt, um die Querstrecke zu erhalten.
- Die Nachformung der Achse Y entlang wird aufrechterhalten.
- Geschwindigkeitskontrolle der Verschiebung der Achse Z entlang, um die Neigung der Querstrecke nach der vorausgegangenen Einstellung des Potentiometers auf der Frontseite der Schalttafel zu bestimmen.
- Der Zähler A wird zum Zählen der Zunahmen der Winkelverschiebungen des Zylinders während der Querstrecken befähigt.
- Rückstellung des Zählers B.
- Einschalten des Zählers C. Er zählt die Anzahl der Verschiebungszunahmen während der

7

Querstrecke zum digitalen Messen der Fugenbreite, die durch den auf der Achse Z angeordneten Inkrementalwandler FC6 gemessen wird.
—  Der Zähler D wird auf C gestellt.
—  Rückstellung der Speicherkreise Typ »latch«, die das Ergebnis des analogischen Vergleichs zwischen den potentiometrischen Übergangsschwellen (S1, S2, S3) der auf der Kassette (rack) eingestellten Raupenanzahl und das digitale/analogische umgeformte Maß der Breite S der Fuge speichern.

Die Vorrückbedingung zum nächsten Programm besteht darin, FC-00 zu aktivieren. FC-00 ist das Signal, das vom elektronischen Fühlgerät zum Ausgleich zwischen elektrischem Bezugssignal der Abweichung der Achse Z und dem Rückführsignal vom Demodulator des Signals des Wandlers der waagerechten Abweichung kommt. Dieses Signal wird beim Erreichen der Flanke aktiv, die der vorausgehenden Flanke gegenüberliegt.
Das Programm 6 (P6) hat folgende Funktionen:

—  Die Speicher (latches) für die Überschreitung der Übergangsschwellen der Raupenzahl sind aufnahmefähig (die Speicherung erfolgt).
—  Die logische Verarbeitung wird vorgenommen und damit die Anzahl der auszuführenden Raupen bestimmt.
—  Die Programmsprünge werden befähigt: Werden vier Raupen bestimmt, springt das Programm zum Programm P8 über; bei der Bestimmung von drei Raupen springt das Programm zum Programm P10 über und bei zwei Raupen kommt das Programm P12 in Frage.
—  Ausführung der Schweißraupe II im Falle von fünf Raupen.
—  Aufrechterhaltung der Nachformung längs der Achsen Y und Z (wie während des Programms P5).
—  Befähigung des Speichers für das Signal der beendigten Zylinderdrehung (Mikroschalter FC3).
—  Ausschalten des Zählers A.
—  Ausschalten des Zählers B bis zur Speicherung des Signals der beendigten Drehung (von FC3).
—  Ausschaltung des Zählers C, in dem der Meßwert der Stemmeiselbreite gespeichert ist.
—  Der Zähler D wird auf den Wert des Zählers C eingestellt.

Die Vorrückbedingung von diesem zum nächsten Programm ist dem Programm P4 gleich, d. h., daß B größer als A (B > A) ist.
Das Programm 7 (P7) führt die folgenden Funktionen aus:

—  Verschieben der Elektrode gegenüber dem Taster (der auf der Flanke abgestützt bleibt) um ein Viertel der gemessenen Fugenbreite, d. h., die Querverschiebung der Achse W wird durch den Schrittmotor M3 ausgeführt.
—  Aufrechterhaltung der Nachformung längs der Achsen Y, Z.
—  Befähigung des Zählers A (Hinzufügen der Zunahme).
—  Rückstellung des Zählers B.
—  Ausschalten des Zählers C.
—  Befähigung des Zählers D, der in abnehmender Weise (in Down) zählt.
Logische Verarbeitung und Festlegung des Verhältnisses zwischen der Frequenz des Zeitgebers (clock 1), die dem Schrittmotor M3 zugesant wird, und der Frequenz, die dem Zähler D in Funktion der Anzahl N der gewählten Raupen zugesandt wird. Es gilt $\frac{1}{N-1}$ (einem Schrittmotor M3 zugesandten Impuls entspricht eine inkrementale Verschiebung, die der mit einem von FC6 gemessenen und dem Zähler C zugesandten Impuls gleich ist).
—  Befähigung des Übergangs von »clock 1« zum Schrittmotor M3. Die Bewegung des Schlittens der Achse W (auf dieser Achse lagert der Taster entsprechend den Achsen Z, Y) hat die gleiche Richtung der Nachformung Z und die Bewegungsgeschwindigkeit ist die gleiche, die auf dem Stirnbrett eingestellt ist. Daraus ergibt sich eine Reflexbewegung des Schlittens der Achse Z (die die Elektrode trägt). Diese Bewegung ist zu der der Nachformung W entgegengesetzten Flanke gerichtet, während der Zähler D um den voreingestellten Wert zurückfährt, der der Fugenbreite bis zu 0 entspricht. Diese Verschiebung ist gleich $\frac{1}{N-1}$ der gemessenen Fugenbreite, d. h., sie entspricht dem Achsabstand zwischen einer und der angrenzenden Raupe.

Die Vorrückbedingung zum Übergang auf das nächste Programm ist, daß D = 0 ist, d. h., daß der Zähler D um den anfänglich eingestellten Wert entleert wird.
Das Programm 8 (P8) kommt vom Programm P6 im Falle von vier Raupen bzw. von P7 im Falle von fünf Schweißraupen. Von diesem Programm werden folgende Funktionen ausgeführt:

— Aufrechterhaltung der Nachformung der Achsen Y, Z.
— Befähigung des Speichers des Signals der Beendigung der Zylinderumdrehung (von FC3).
— Ausschalten des Zählers A.
— Ausschalten des Zählers B bis zur Speicherung des Signals der Umdrehungsbeendigung (von FC3).
— Ausschalten des Zählers C.
— Umstellung des Zählers D auf C.

Die Vorrückbedingungen zum nächsten Programm sind den Bedingungen des Programms P4 gleich, d. h., daß B größer als A (B > A) ist.

Das Programm 9 (P9) führt die zweite Querstrecke der Achse W aus, wenn der Sprung von P7 auf P8 erfolgt ist und die erste Querverschiebung der Achse W, wenn der Sprung von P6 auf P8 erfolgt ist. Alle übrigen Vorgänge erfolgen wie im Programm P7.

Die Vorrückbedingung zum nächsten Programm ist dieselbe wie für das Programm P7, d. h., D muß immer gleich Null sein (D = 0).

Das Programm 10 (P10) führt die Schweißraupe IV im Falle von fünf Raupen, die Raupe III im Falle von vier Raupen (in diesem Falle kommt das Programm von P9) und die Raupe II im Falle von drei Raupen (in diesem Falle kommt das Programm von P6) aus.

Alle anderen Vorgänge sind den während des Programms P8 ausgeführten Vorgängen gleich.

Die Vorrückbedingungen zum nächsten Programm sind ebenfalls dem Programm P4 und P8 gleich, d. h., B muß größer als A sein (B > A).

Das Programm 11 (P11) führt die dritte Querverschiebung der Achse W aus, wenn man vom Programm P7 und dann vom Programm P8 ausgeht. Die zweite Querverschiebung erfolgt, wenn man vom Programm P6 und dann von P8 kommt. Die erste Querverschiebung erfolgt, wenn man vom Programm P6 und dann von P10 kommt.

Alle übrigen Vorgänge erfolgen in derselben Weise wie während des Programms P7.

Die Vorrückbedingungen zum nächsten Programm sind denen für das Programm P7 gleich, d. h. D = 0.

Das Programm 12 (P12) kommt vom Programm 11, wenn es erforderlich war, fünf, vier und drei Schweißraupen auszuführen oder es kommt vom Programm P6, wenn festgelegt ist, zwei Schweißraupen auszuführen.

Während dieses Programms wird die Schweißraupe II im Falle von fünf Raupen ausgeführt, die Raupe IV im Falle von vier Raupen und die Raupe III im Falle von drei Raupen, d. h., wenn von P11 ausgegangen wird, während die Raupe II im Falle von zwei Schweißraupen ausgeführt wird, wenn man von P6 kommt. Alle anderen Vorgänge entsprechen dem Programm P8.

Die Vorrückbedingungen zum nächsten Programm sind denen des Programms P4 gleich, d. h., daß B > A ist.

Das Programm 13 (P13) läßt eine Querverschiebung längs der Achse W ausführen, die die vierte ist, wenn man vom Programm P7 und dann von P8 kommt, die dritte, wenn man vom Programm P6 und dann von P10 kommt. Im Falle von zwei Raupen erfolgt der Sprung auf Programm P15.

Die Vorrückbedingungen zum nächsten Programm sind denen des Programms P7 gleich, d. h. D = 0.

Das Programm 14 (P14) führt im Falle von fünf, vier und drei Raupen folgenden Funktionen aus:

— Stillstand der waagerechten Nachformung, d. h. auf der Achse Z (Motor M2).
— Aufrechterhaltung der waagerechten Nachformung längs der Achse Y.
— Rückstellung auf 0 des Abstandes zwischen Elektrode und Taster durch den Schlitten der Achse W (Schrittmotor M3), um den mit der Elektrode fluchtenden Taster, der eine Schweißschicht vollendet hat und eine neue beginnen muß, zurückzubringen. Der Schrittmotor M3 arbeitet weiter, bis FC2 gedrückt wird. FC2 ist der Endschalter von 0 der Achse W.

Zum Vorrücken zum nächsten Programm ist es erforderlich, daß FC2 gedrückt wird.

Das Programm 15 (P15) kommt vom Programm 14 im Falle von fünf, vier, drei Raupen oder vom Programm P13 im Falle von zwei Schweißraupen.

Während dieses Programms werden folgende Vorgänge durchgeführt:

— Bewegung der waagerechten Nachformung des Schlittens der Achse Z in entgegengesetzter Richtung zur Richtung des Programms P5 (d. h., in Anfangsrichtung der Nachformung) im Falle von fünf, vier und drei Raupen. Der Taster stützt sich auf die Fugenflanke ab, auf die er zurückgezogen wurde. Im Falle von zwei Raupen führt der Taster (und die Elektrode) eine vollständige Überquerung der Fuge aus.
— Geschwindigkeitskontrolle der Achse Z nach Einstellung der Potentiometers auf der Stirnseite.

Die Vorrückbedingung zum nächsten Programm ist, daß FC-00 (Endschalter von 0 waagerecht) aktiviert ist, d. h. die gleiche Bedingung wie für das Programm P2.

Das Programm 16 (P16) führt folgende Vorgänge aus:

— Überprüfung der Rückführung auf Null (FC2 gedrückt) des Schlittens der Achse W, der vom Schrittmotor M3 gesteuert wird, und zwar im Falle von fünf, vier und drei Raupen.
— Im Falle von zwei Raupen wird das Programm P17 übersprungen.

Das Programm 17 (P17) kommt bedingungslos vom Programm 16 im Falle von zwei Raupen oder bedingungsweise vom Programm P16 im Falle von fünf, vier und drei Raupen. Das Programm führt folgende Vorgänge durch:

— Befähigung der Kontrolle des Speichers Typ »latch«, der die Aktivierung des Endschalters FC1 (Mikroschalter für die größte Schweißhöhe in der Fuge) fühlt, wobei die Lampe L20 auf dem Stirnbrett aufleuchtet. Damit wird die Beendigung des Kreislaufs signalisiert, der den Ruf an P0 über den Druckknopf PS2 auf der Stirnseite auslöst.
— Anruf »jog« (Befähigung der manuellen Schaltungen) und Übergang des intermittierenden Leuchtalarms L20 von intermittierend auf dauernd, wenn der Endschalter FC1 sich eingeschaltet hat; man kann dann nur noch manuell vorgehen.

Die Vorrückbedingung zum nächsten Programm ist, daß FC1 nicht eingegriffen hat.

Das Programm 18 (P18) hat die Funktion, das Programm P4 zu überspringen, so daß eine nachfolgende Schicht ausgeführt werden kann.

In den Fig. 13 und 14 ist die Druckknopftafel sowie die Stirntafel dargestellt. Sie zeigen die verschiedenen Druckknöpfe und Wahlschalter, deren Funktionsweise oben beschrieben wurde oder aus den Figuren selbst ersichtlich ist.

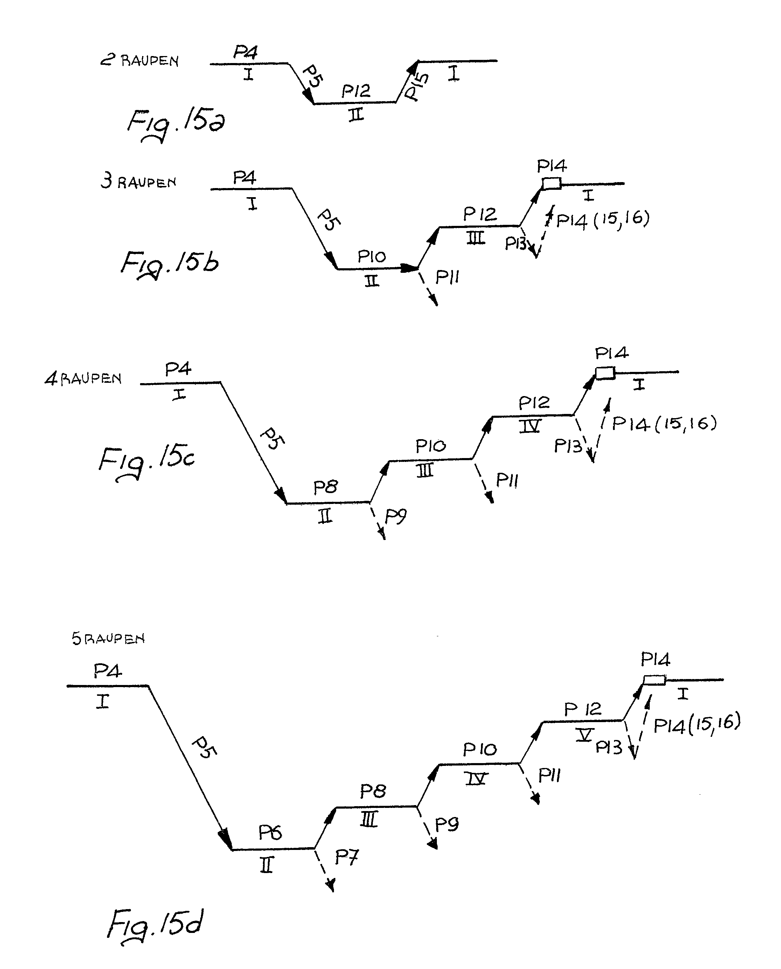

Die Fig. 15a, 15b, 15c, 15d zeigen Draufsichten auf die Schichten von zwei, drei, vier und fünf Raupen. In diesen Figuren sind mit vollen Linien die durchgeführten Schweißschichten angegeben. Die erste, zweite, dritte und die folgenden Schweißraupen sind mit römischen Ziffern bezeichnet, während die verschiedenen Programme, in denen jede spezifische Schweißraupe durchgeführt wurde, mit P4, P5, P6 ... usw. bezeichnet sind. Die gestrichelten Pfeile zeigen die Verschiebung des Tasters, der die Bewegung der Elektrode in entgegengesetzter Richtung veranlaßt; mit P7, P9, P11, P13 sind die Programme bezeichnet, die diese Verschiebungen steuern. Mit einem kleinen Rechteck ist außerdem der Vorgang des Rückzugs des Tasters in seine Anfangsstellung bezeichnet.

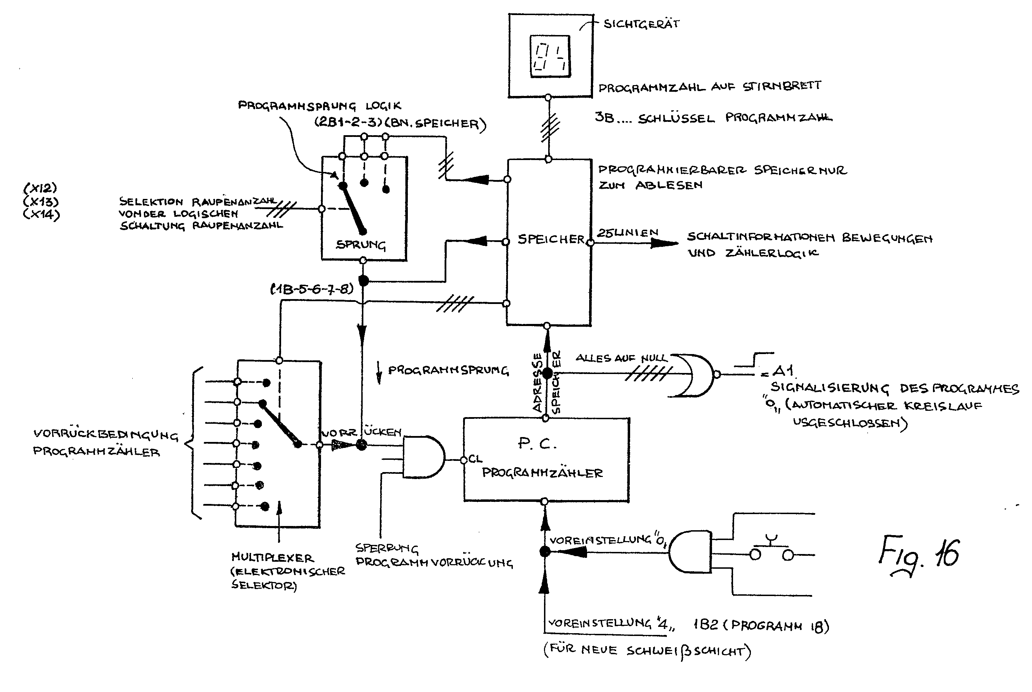

In Fig. 16 ist ein Blockdiagramm der Programmierlogik dargestellt.

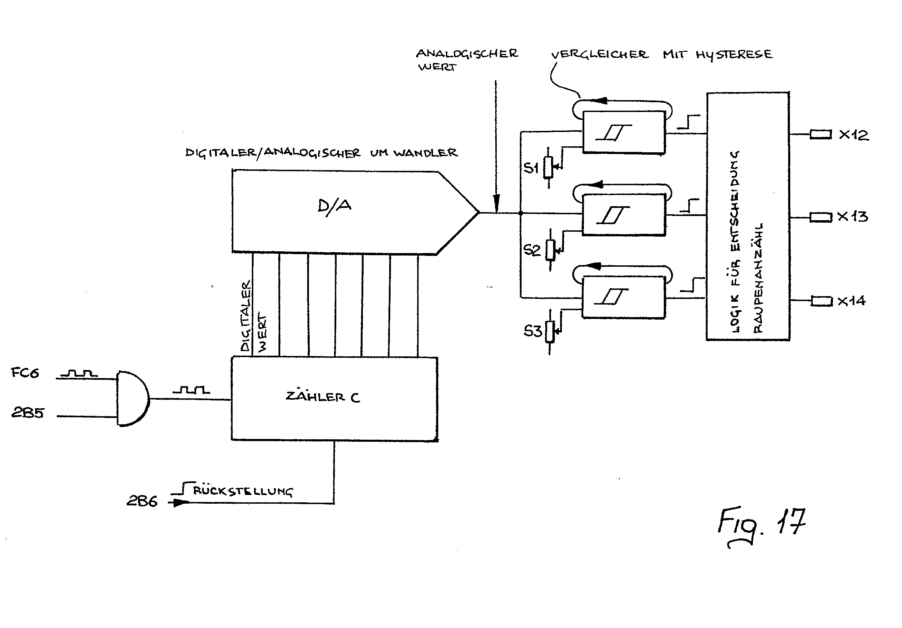

Aus Fig. 17 ist dagegen die Logik für die Raupenzahl sichtbar.

An den Ausgängen X12, X13, X14 ergeben sich je nach den auf der Stirntafeln eingestellten Referenzpunkten S1, S2, S3 die logischen Zustände, die den voreingestellten Raupen entsprechen, und zwar:

| Funktionsweise | Ausgang X 12 | Ausgang X 13 | Ausgang X 14 |
|---|---|---|---|
| 2 Raupen | 1 | 0 | 0 |
| 3 Raupen | 0 | 1 | 0 |
| 4 Raupen | 0 | 0 | 1 |
| 5 Raupen | 0 | 0 | 0 |

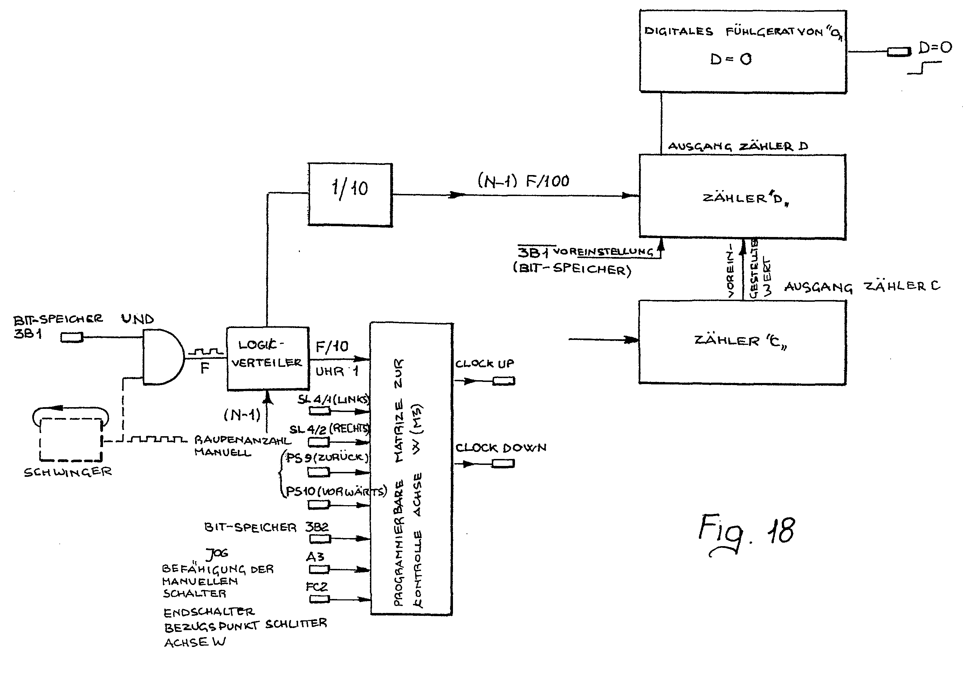

Die Fig. 18 zeigt die Logik des Schrittmotors M3 der Achse W.

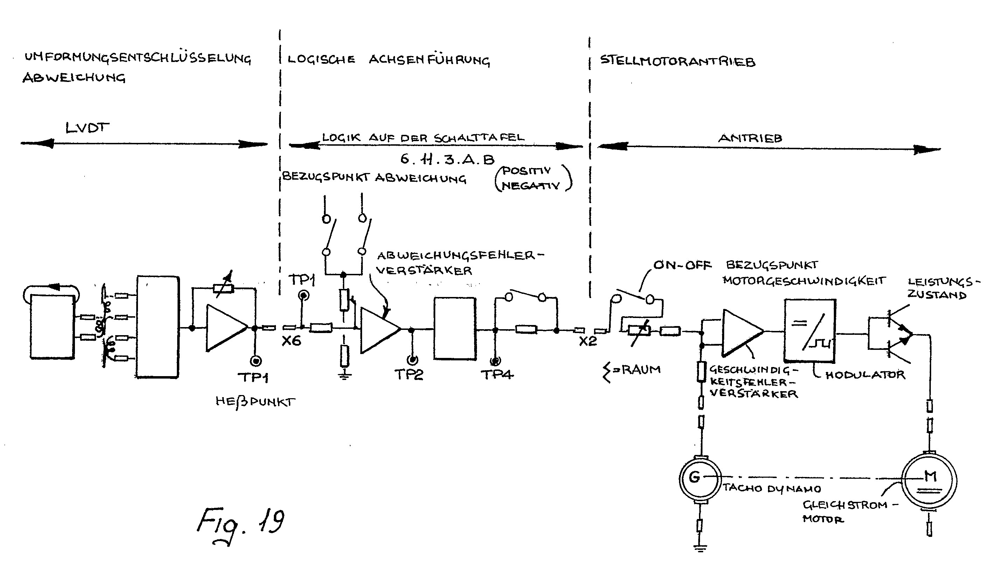

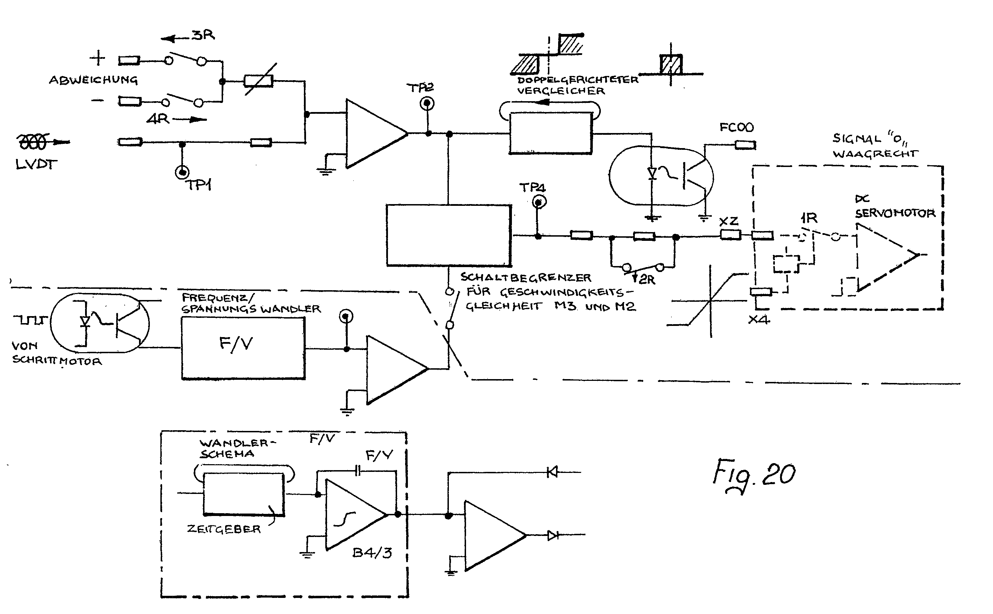

Die Fig. 19 und 20 zeigen das Blockdiagramm der Steuerung des liegenden Motors M2 der Achse Z bzw. das Diagramm zur Betätigung des Motors.

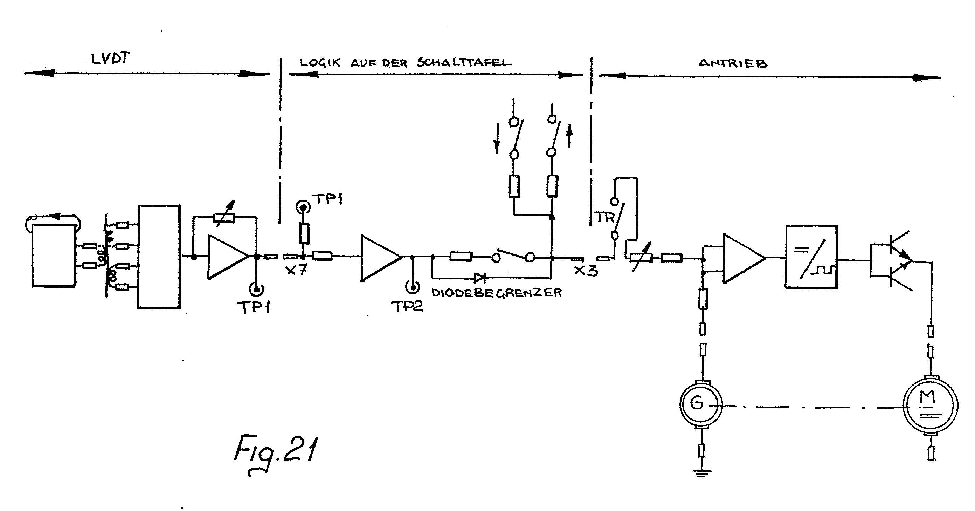

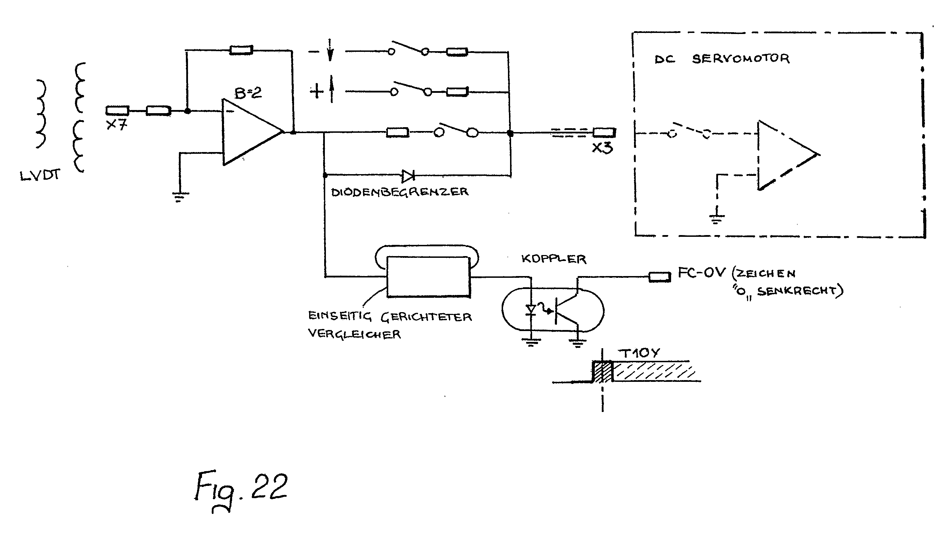

Die Fig. 21 und 22 sind Diagramme, die den vorstehend beschriebenen entsprechen, jedoch den Motor M1 der Achse Y betreffen. In Fig. 21 ist eine Vorrichtung zum Schutz des Tasters in senkrechter Richtung sowohl im Falle des Stillstandes als auch während der normalen Betriebsweise vorgesehen; wenn der Taster einen Stoß oder ein anderes außergewöhnliches Ereignis erfährt, wird er bis zum höchstmöglichen Punkt erhoben.

**Patentansprüche**

1. Verfahren zum selbsttätigen Lichtbogen-Verbindungsschweißen in sich geschlossener Nähte von zwei Körpern, wobei die in drei aufeinander senkrechten Achsen bewegliche Elektrode (28) durch einen auf einer Fugenflanke (29, 30) laufenden Taster (27) geführt und durch eine automatische Schaltungsanordnung nach dem Schweißpaß wiederholt um eine Raupenbreite quer zur Fugenflanke (29, 30) versetzt wird, dadurch gekennzeichnet,

a) daß die erste Schweißraupe (I) in an sich bekannter Weise gegen die eine Fugenflanke (29) gelegt wird,

b) daß nach der durch einen Geber (FC3) ermittelten Beendigung der ersten Raupe (I) sowohl dem Taster (27) wie der Elektrode (28) eine Bewegung quer zur Fugenrichtung überlagert wird, so daß sich Taster (27) und Elektrode (28) in einem einstellbaren Winkel ($\alpha$) geradlinig schräg über die Fuge (20) bis zur Anlage des Tasters (27) an die andere Fugenflanke (30) verschieben,

c) daß dabei die Breite (S1, S2 ...) der Fuge (20) gemessen und in Beziehung zu einem einstellbaren Schweißraupen-Breitenbereich gesetzt und die Zahl der erforderlichen Schweißraupen ermittelt wird,

d) daß nach Anlage des Tasters (27) an die andere Fugenflanke (30) eine zweite Schweißraupe (II) an sie gelegt wird,

e) daß jeweils nach Beendigung dieser Schweißraupe (II) und der folgenden Schweißraupen (III, IV, V) derselben Lage die Elektrode (28) um eine Schweißraupenbreite in Richtung auf die erste Fugenflanke (29) gegenüber dem Taster (27) versetzt wird, um eine weitere Schweißraupe auszuführen, und

f) daß am Ende der Ausführung der zwischen der ersten (I) und zweiten (II) liegenden Raupen (III, IV, V) die Elektrode (28) in Richtung auf die erste Fugenflanke (29) versetzt wird, während der Taster (27) mit der Elektrode (28) ausgerichtet wird, und eine neue Schweißlage beginnt,

g) wobei der Taster (27) auch den Fugengrund abtastet und damit die Position der Elektrode (28) senkrecht zum Fugengrund steuert.

2. Verfahren nach Anspruch 1, dadurch gekennzeichnet, daß ein Fühler (FC7) die effektive Verschiebung D in Fugenrichtung abtastet und die Verschiebung in Querrichtung so steuert, daß sie gleich kD ist, wobei k eine Konstante ist.

3. Verfahren nach Anspruch 2, dadurch gekennzeichnet, daß die Verschiebung D jeder dieser Querstrecken aufsummiert wird und daß jede neue Raupe bis zur gespeicherten Summe über das Ende der ersten Raupe (I) hinaus erstreckt wird.

4. Vorrichtung zur Durchführung des Verfahrens nach einem der Ansprüche 1 – 3, wobei der Taster (27) und die Elektrode (28) gemeinsam durch einen ersten Schlitten (21) senkrecht zum Fugengrund und durch einen zweiten Schlitten (22) quer zur Fugenlängsrichtung verschiebbar sind, wobei ein dritter Schlitten (25) vorgesehen ist, durch welchen der Taster (27) bezüglich der Elektrode (28) parallel zur Bewegungsrichtung des zweiten Schlittens (22) verschiebbar ist, wobei der Taster durch Abtasten des Fugengrundes einen Antriebsmotor (M1) des ersten Schlittens (21) und durch Abtasten der einen Flanke (29, 30) der Fuge (20) einen Antriebsmotor (M2) des zweiten Schlittens (22) steuert, und wobei ein Rechner (31) vorgesehen ist zur Ermittlung der Fugenbreite und der erforderlichen Verschiebungsbeträge des dritten Schlittens (25) zur Ausführung der zwischen der ersten (I) und zweiten (II) Raupe einzulegenden weiteren Schweißraupen (III, IV, V).

5. Vorrichtung nach Anspruch 4, dadurch gekennzeichnet, daß die Drehgeschwindigkeit der Motoren (M1, M2) des ersten und zweiten Schlittens (21, 22) proportional zur zugehörigen Auslenkung des Tasters (27) ist.

6. Vorrichtung nach Anspruch 4 oder 5, dadurch gekennzeichnet, daß der dritte Schlitten (25) durch einen Schrittmotor (M3) mit regelbarer Geschwindigkeit verschiebbar ist.

7. Vorrichtung nach Anspruch 6 zur Durchführung des Verfahrens nach Anspruch 2, dadurch gekennzeichnet, daß die Geschwindigkeit des Schrittmotors (M3) durch den Fühler (FC7) gesteuert ist.

## Claims

1. A process for carrying out an automatic arc joint weld of two bodies along closed seams, the movable electrode (28) being guided along three axes perpendicular to one another by a feeler (27) sliding on the joint side (29, 30) and which electrode is repeatedly displaced for a distance equal to a bead width transversely with respect to the joint side (29, 30) by an automatic control device after each pass, characterized in that:

(a) the first welding bead (I) is laid, as well known, against a joint side (29);

(b) upon completion of the first bead (I), as ascertained by a transmitter (FC3), both the feeler (27) and the electrode (28), are shifted across the joint direction, so that said feeler (27) and electrode (28) are displaced rectilinearly across the joint (20) forming an adjustable angle ($\alpha$) until the feeler (27) bears on the other side (30) of the joint;

(c) simultaneously the width (S1, S2 ...) of the joint (20) is measured and related to a range of adjustable bead widths and the number of required welding beads is ascertained;

(d) after said feeler (27) bears on the other side (30) of the joint, a second welding bead (II) is laid on the latter;

(e) upon completion of said bead (II) and following beads (III, IV, V) of the same layer, the electrode (28) is displaced of a width of the welding bead in the direction of the first side (I) of the joint relative to the feeler (27) to carry out a further welding bead;

(f) upon completion of beads (III, IV, V) placed between the first (I) and second (II) bead, the electrode (28) is moved in the direction of the first side (29) of the joint, while the feeler (27) is aligned with the electrode (28) and a new welding layer starts;

(g) while the feeler (27) also scans the joint bottom and thus controls the position of the electrode (28) vertically to the joint bottom.

2. A process according to Claim 1, characterized in that a sensor (FC7) senses the actual displacement D in the direction of the joint and accordingly controls the displacement in transverse direction to be equal to kD, wherein k is a constant.

3. A process according to Claim 2, characterized in that the displacement D of these transverse travels is stored in a memory and each bead extends up to the stored sum beyond the end of the first bead (I).

4. A device for carrying out a process according to any Claim from 1 to 3, wherein the feeler (27) and the electrode (28) can be displaced together by a first slide (21) vertically with respect to the joint bottom and by a second slide (22) transversely with respect to the longitudinal extension of the joint, a third slide (25) being provided by which said feeler (27) can be displaced relative to the electrode (28) parallel to the direction of movement of the slide (22), by scanning the joint bottom, said feeler controlling a drive motor (M1) for the first slide (21) and also by scanning one side (29, 30) of the joint (20) controlling a drive motor (M2) for the second slide, a computer (31) being provided, which ascertains the width of the joint and the displacement values which are required for the third slide (25) to provide the further welding beads (III, IV, V) to be carried out between the first bead (I) and second bead (II).

5. A device according to Claim 4, characterized in that the speed of rotation for said motors (M1, M2) of the first and second slide (21, 22) is proportional to the relative deflection of the feeler (27).

6. A device according to Claim 4 or 5, characterized in that said third slide (25) is displaceable by means of a step motor (M3) having an adjustable speed.

7. A device according to Claim 6, for carrying out the process according to Claim 2, characterized in that the speed of the stop motor (M3) is controlled by the sensor (FC7).

**Revendications**

1. Procédé pour réalisier une soudure automatique a l'arc pour la connection de deux corps au moyen de cordons fermés, une electrode (28) mobile étant guidée le long de trois axes perpendiculaires l'un à l'autre au moyen d'un palpeur (27) qui coulisse sur un flanc (29, 30) du joint et qui se déplace après chaque passe de la largeur d'un cordon, à plusieurs reprises, transversalement par rapport au flanc (29, 30) du joint au moyen d'un dispositif automatique de commande, caractérisé en ce que:

a) le premier cordon de soudure (I) est déposé de façon connue contre un flanc (29) du joint;

b) après la fin de l'execution du premier cordon (I) détectée par un trasmetteur (FC3) on imprime aussi bien au palpeur (27) qu'à l'électrode (28) un mouvement transversal par rapport à la direction du joint, de manière que le palpeur (27) et l'électrode (28) se déplacent en ligne droite transversalement au joint (20) en formant un angle $\alpha$ réglable jusqu'à faire appuyer le palpeur (27) sur l'autre flanc (30) du joint;

c) en même temps on mesure la largeur (S, S2, . . .) du joint (20) et on la compare avec une gamme réglable des largeurs du cordon et on détermine le nombre de cordons de soudure nécessaire;

d) après l'appui du palpeur (27) sur l'autre flanc du joint (30), on dépose auprès de celui-ci un second cordon de soudure (II);

e) lorsque l'on achève ledit cordon (II) et les cordons successifs (III, IV, V) de la même passe, on déplace l'électrode (28) d'une largeur de cordon de soudure en direction du premier flanc (29) du joint par rapport au palpeur (27) de façon d'effectuer un ultérieur cordon de soudure suivant;

f) à la fin de l'exécution des cordons (III, IV, V) qui se trouvent entre le premier (I) et le second (II) cordon, on déplace l'électrode (28) en direction du premier flanc (29) du joint, tandis que l'on aligne le palpeur (27) avec l'électrode (28) et on commence une nouvelle passe de soudure;

g) le palpeur (27) explore aussi le fond du joint et commande ainsi la position de l'électrode (28) verticalement par rapport au fond du joint.

2. Procédé selon la revendication 1, caractérisé en ce qu'un détecteur (FC7) explore le déplacement effectif D dans la direction de l'axe du joint et commande, le déplacement en direction transversale de façon que celui-ci soit égal à kD, k étant une constante.

3. Procédé selon la revendication 2, caractérisé en ce qu'on fait la somme du déplacement D de

**0 012 962**

chacun des parcours transversaux et que chaque nouveau cordon s'étend jusqu'à la somme mémorisée au delà de l'extrémité du premier cordon (I).

4. Dispositif pour la réalisation du procédé selon l'une des revendications de 1 à 3, dans lequel le palpeur (27) et l'électrode (28) peuvent être déplacés ensemble par l'intermédiaire d'un premier chariot (21) verticalement par rapport au fond du joint et, par l'entremise d'un second chariot (22), transversalement par rapport à la direction longitudinale du joint, dans lequel on a prévu un troisième chariot (25) au moyen duquel le palpeur (27) peut être déplacé, par rapport à l'électrode (28), parallèlement à la direction du mouvement du deuxième chariot (22); le palpeur commandant, au moyen de l'exploration du fond du joint, un moteur d'entraînement (M1) du premier chariot (21) et en outre au moyen de l'exploration d'un flanc (29, 30) du joint (20) un moteur d'entraînement (M2) du second chariot (22), un calculateur (31) étant prévu, pour détecter la largeur du joint et les valeurs de déplacement qui sont nécessaires au troisième chariot (25) pour exécuter les ultérieurs cordons suivant de soudure (III, IV, V) à réaliser entre le premier (I) et le second cordon (II).

5. Dispositif selon la revendication 4, caractérisé en ce que la vitesse de rotation des moteurs (M1, M2) du premier et du second chariot (21, 22) est proportionelle à la déviation correspondante du palpeur (27).

6. Dispositif selon la revendication 4 ou 5, caractérisé en ce que le troisième chariot (25) peut être déplacé au moyen d'un moteur pas à pas (M3) à vitesse réglable.

7. Dispositif selon la revendication 6 pour la realisation du procédé selon la revendication 2, caractérisé en ce que la vitesse du moteur pas à pas (M3) est commandée par le détecteur (FC7).

13

Fig. 4

Fig. 3

Fig. 2

Fig. 1

S>S3

S2<S<S3

S1≤S<S2

S<S1

Fig.5

Fig.8

Fig. 6

Fig. 7

Fig. 11

Fig. 9

Fig. 10

0 012 962

Fig. 12a

VOLLSTÄNDIG
GESCHLOSSEN
BEREIT ZUM
ARBEITSBEGINN

P0 RUHESTELLUNG

P3 WARTESTELLUNG VORHANDENSEIN DES BOGENS

PRÜFEN DAß H3 = "O" FG 2 GEDRÜCKT — NEIN / JA

SL1 — NACHFORMUNG / MANUELL

SL2 — NACHFORMUNG / MANUELL

SL3 — AUS / ON

PS1 — AUS / ON

P1 SENKRECHTE ANNÄHERUNG M1 IN NACHFORMUNG

PRÜFEN "O" SENKRECH FC-OV — NEIN / JA

P2 SEITLICHE ANNÄHERUNG M2 IN NACHFORMUNG

PRÜFEN "O" WANDLER FC-OO — NEIN / JA

RUF "O", VORGESTELLTER KREISLAUF

ODER
UND
STÖRUNG
PS2
SIGNAL
KREISLAUFBEENDIGUNG

KONTAKT I3 — NEIN / JA

VON DER SCHWEIß-MASCHINE

SI2

VON P18

P4 1. SCHWEIßRAUPE WARTESTELLUNG (FC3 + B > A)

FC3 + B > A — NEIN / JA

P5 1. QUERSTRECKE M2 UNKEHR BEZUGSPUNKT WANDLER

PRÜFEN "Q WAAGRECHT FC-OO — NEIN / JA

P6 2. SCHWEIßRAUPE WARTESTELLUNG (FC3 + B > A)

FC3 + B = A — NEIN / JA

P7 1. QUERSTRECKE DURCH SCHRITTMOTOR WARTESTELLUNG (D = O)

D = O — NEIN / JA

S. FIG. 12b

23

Fig. 12b

Fig. 13

Fig. 14

0 012 962

2 RAUPEN

Fig. 15a

3 RAUPEN

Fig. 15b

4 RAUPEN

Fig. 15c

5 RAUPEN

Fig. 15d

29

Fig. 16

ANALOGISCHER WERT

VERGLEICHER MIT HYSTERESE

DIGITALER/ANALOGISCHER UM WANDLER

D/A

DIGITALER WERT

LOGIK FÜR ENTSCHEIDUNG RAUPENANZÄHL

S1

S2

S3

X12

X13

X14

FC6

2B5

ZÄHLER C

2B6  RÜCKSTELLUNG

Fig. 17

Fig. 18

UMFORMUNGSENTSCHLÜSSELUNG ABWEICHUNG

LOGISCHE ACHSENFÜHRUNG

STELLMOTORANTRIEB

LVDT

LOGIK AUF DER SCHALTTAFEL

ANTRIEB

6.H.3.A.B (POSITIV / NEGATIV)

BEZUGSPUNKT ABWEICHUNG

ABWEICHUNGSFEHLER-VERSTÄRKER

ON-OFF BEZUGSPUNKT MOTORGESCHWINDIGKEIT

LEISTUNGS-ZUSTAND

TP1

TP1

X6

TP2

TP4

X2

§=RAUM

GESCHWINDIG-KEITSFEHLER-VERSTÄRKER

MODULATOR

HEßPUNKT

G

TACHO DYNAMO

M

GLEICHSTROM-MOTOR

*Fig. 19*

0 012 962

Fig. 20

LVDT          LOGIK AUF DER SCHALTTAFEL          ANTRIEB

TP1

TP1          X7          TP2          DIODEBEGRENZER          X3          TR

0 012 962

G          M

Fig. 21

Fig. 22

0 012 962